# EUROPÄISCHE PATENTSCHRIFT

(11) **EP 1 010 931 B1**
(45) Veröffentlichungstag und Bekanntmachung des Hinweises auf die Patenterteilung: **24.10.2001**
(21) Anmeldenummer: 99124682.8
(22) Anmeldetag: 11.12.1999
(51) Int. Cl.: F16L 23/036, F16L 23/028

(54) **Lösbare Verbindung von rotationssymmetrischen Bauteilen**
Detachable fastening of elements with rotational symmetry
Connexion amovible des pièces symétriques de révolution

(30) Priorität: 03.12.1999 DE 19958260; 16.12.1998 DE 19858171
(43) Veröffentlichungstag der Anmeldung: 21.06.2000
(73) Patentinhaber: Schlemenat, Alfred, 45701 Herten (DE)
(72) Erfinder: Schlemenat, Alfred, 45701 Herten (DE)

(56) Entgegenhaltungen:
- EP-A- 0 775 863
- DE-A- 1 475 860
- DE-A- 1 750 069
- US-A- 3 873 138
- W.HAMPP: "WÄLZLAGERUNGEN, Berechnung und Gestaltung" 1971 , SPRINGER-VERLAG , BERLIN(DE)/HEIDELBERG(DE)/NEW YORK(US) XP002133180 * Kapitel 15.4 "Anstellen von Schräglagern", S.142, Abb. 170, 171 *

## Beschreibung

Die Erfindung betrifft eine lösbare Verbindungsanordnung zur kraft- und formschlüssigen Verbindung von rotationssymmetrischen, paarigen oder unpaarigen Bauteilen, beispielsweise für extrem belastete Verbindungen großen Durchmessers von Rohr- oder Zylinderenden untereinander, ferner für Verbindungen von Maschinen- / Armaturengehäusen bzw. Rohr- / Zylinderenden mit einem gewölbten, ebenen oder dem Verwendungszweck entsprechend konstruktiv ausgebildeten Verschlußdeckel, für Deckelverschlüsse an Hochdruckhydraulikzylindern sowie für Verbindungen von rotierenden Bauteilen, u.a. Großwälzlagern mit deren Anschlußkonstruktionen gemäß dem Oberbegriff der Ansprüche 1, 2, 3 und 4.

Aus der EP 0 775 863 B1 ist eine lösbare Verbindungsanordnung zur kraft- und formschlüssigen Verbindung von rotationssymmetrischen Bauteilen bekannt, die im Vergleich zu konventionellen Verbindungen mit kleineren Abmessungen eine wesentliche Verbesserung hinsichtlich der Belastbarkeit erzielt und bei Flanschverbindungen die Sicherheit gegen Undichtigkeiten erhöht. Gleichzeitig wird die Anfälligkeit gegen eine Verschlechterung des Verspannungszustandes herabgesetzt. Im Gegensatz zu den geometriebedingt weit auskragenden konventionellen Normflanschen stellt diese Verbindung eine kompakte Bauart dar und führt zu Materialeinsparungen. In fast allen Bereichen der Technik ergeben sich neben ökonomischer Vorteile besonders in der Chemie sowie bei der Förderung, dem Tranport und der Verarbeitung von Erdöl und Erdgas unüberschaubare ökologische Vorteile. Bei Verbindungsanordnungen mit relativ großen Durchmessern führen Fertigungsprobleme jedoch zu hohen Bearbeitungs- und Herstellungskosten.

Bauteile mit weit auskragenden Anbauten oder angearbeiteten Stutzen, z.B. große zylindrische Verbindungen in der Offshore-Technik, im Stahlbau oder an schweren Maschinengehäusen können nicht immer auf Großbohrwerken bearbeitet werden, so daß der Einsatz transportabler Bohrwerke erforderlich ist. Von der Leistung her sind diese mit Großbohrwerken nicht vergleichbar. Da die Bohrungen in der Hülse zur Aufnahme der Spannschrauben nicht in einem rechten Winkel zur horizontalen oder zur vertikalen Achsrichtung der Bohrwerke angeordnet sind, ist der Einsatz langer Spindeln erforderlich. Wegen auftretender Schwingungen der Spindeln sind die Bohrleistungen beschränkt. Es stellen sich lange Bearbeitungszeiten ein, die zu hohen Bearbeitungskosten führen.

Große Fertigungsprobleme stellen sich bei der Herstellung der Spannelemente nach der EP 0 775 863 B1 ein. Diese erfordern zur vollflächigen Anlage in der kegeligen Ausdrehung der Hülse eine ebenfalls kegelig ausgeführte Oberfläche mit einer entsprechenden Oberflächengüte. Die einzelnen Elemente werden aus einem gedrehten Ring, der den Querschnitt und somit auch die kegelige Anlagefläche der Spannelemente aufweist, durch radiales Zersägen hergestellt. Bei Verbindungen von großen Durchmessern, u.a. bei Großwälzlagern mit deren Anschlußkonstruktionen sind nur relativ dünnwandige Spannelemente erforderlich. Der entsprechende Ring zum Herstellen der Elemente weist jedoch die erforderliche Steifigkeit zum Spannen und zur weiteren mechanischen Bearbeitung nicht auf. Dieses hat zur Folge, daß die geforderten Oberflächengüten gar nicht oder nur mit besonderen Spannwerkzeugen entsprechend kostenaufwendig hergestellt werden können. Weitere Bearbeitungsmöglichkeiten durch Schleifen oder Fräsen, z.B. auf 5-Achsen Fräsmaschinen erzeugen ebenfalls hohe Fertigungskosten.

Der größte Nachteil ergibt sich jedoch daraus, daß für jede Verbindungsanordnung entsprechend der unterschiedlichen Durchmesser und Belastungen verschiedene Spannelemente mit unterschiedlichen Radien und kegeligen Flächen erforderlich sind. Dieses schließt eine Standardisierung und Serienfertigung bei der Herstellung der Spannelemente aus. Zudem erfordert das radiale Zersägen des Ringes für jeden Durchmesser eine gesonderte Hilfskonstruktion. Die gesamte Herstellung der Spannelemente ist zeit- und kostenaufwendig.

Ein weiterer Nachteil zeigt sich, wenn hochbelastete Deckelverschlüsse zur Nutzung der mit der EP 0 775 863 B1 erzielbaren Vorteile entsprechend der Erforderlichkeit eines Verfahrens in kurzen Zeitabständen geöffnet und wieder geschlossen werden müssen. Das jeweils einzelne Verspannen der Spannelemente zwischen Bund und Hülse stellt sich in bestimmten Situationen als zu zeitaufwendig heraus, so daß in diesen Fällen die Vorteile der EP 0 775 863 B1 nicht genutzt werden können.

Aufgabe der Erfindung ist es; eine Verbindungsanordnung der angegebenen Art, besonders für große und extrem belastete Bauteile zur Vermeidung einzelner oder aller der zuvor dargestellten Nachteile so auszugestalten, daß sie vor allem im Vergleich zu der bekannten Anordnung nach der EP 0 775 863 B1 kostengünstiger herzustellen ist, wobei die gesamten Herstellungskosten in ökonomischer Relation zu den mit der EP 0 775 863 B1 zu erzielenden Vorteilen stehen.

Die Aufgabe wird erfindungsgemäß durch die in den Ansprüchen 1 - 4 angegebenen Verbindungsanordnungen gelöst. Die Unteransprüche beziehen sich auf vorteilhafte weitere Ausgestaltungen der Erfindung.

Entsprechend den Merkmalen des Anspruchs 1 bzw. 2 ist an einem oder an beiden der zu verspannenden Bauteile eine Schulter angeordnet. Zwischen dieser und den Spannelementen bewirken Verspannmittel während des Zusammenbaus einen Kraft- und Formschluß zwischen der Hülse, den Spannelementen und dem jeweiligen Bund oder Ring des zu verspannenden Bauteils. Dadurch entfallen die gegenüber einer Ausführung nach der EP 0 775 863 B1 nur kostenintensiv herzustellenden, nicht in einem rechten Winkel zur horizontalen oder zur vertikalen Achsrichtung der Verbindung angeordneten Bohrungen in der Hülse. Entsprechend der Größe und der Bearbeitungsmöglichkeiten der einzelnen Bauteile können die Schultern direkt an diesen angearbeitet oder aus ein- oder mehrteiligen Einzelsegmenten hergestellt werden. Es ergeben sich Fertigungsvorteile, die zu den angestrebten Kosteneinsparungen führen.

Von der Schulter bzw. von den Einzelsegmenten werden keine Betriebsbelastungen übertragen, sondern nur relativ geringe Kräfte, die zum Erreichen des Verspannungszustandes erforderlich sind. Daher können diese bei einer aus Segmenten hergestellten Schulter z.B. als relativ kleine Einzelsegmente an rechtwinklig zu einer Achse verlaufenden Flächen oder fertigungstechnisch einfach herzustellenden Bohrungen an einem der zu verspannenden Bauteile angeordnet oder entsprechend der Erforderlichkeit zusätzlich mit der Hülse verbunden oder nur an der Hülse befestigt werden. Sie können z.B. eingesteckt, verschraubt oder mit relativ kleinen Schweißnähten verschweißt werden.

Weitere Vorteile stellen sich bei allen Verbindungen von Maschinen- oder Armaturengehäusen bzw. von Rohr- oder Zylinderenden mit einem gewölbten, ebenen oder dem Verwendungszweck entsprechend konstruktiv ausgebildeten Verschlußdeckel ein. So erzeugt der nur bis zur Dichtung anstehende Innendruck eine in jedem Fall geringere radiale Ausdehnung der Hülse als die mit vollem Innendruck belastete angeschlossene Zylinderschale. Durch die sich einstellende Deckelwölbung verringert sich der radiale Abstand zwischen der Schulter und den Spannelementen. Unabhängig von der Wahl der Verspannmittel bewirkt der ansteigende Innendruck eine Erhöhung der Verspannungssicherheit.

Auch bei der erfindungsgemäßen Anordnung der Schulter in dem zylindrischen Bereich eines der zu verbindenden Bauteile wird gleichermaßen die Verspannungssicherheit erhöht. Mit ansteigendem Innendruck stellen sich aufgrund des sogenannten S-Schlags in der Zylinderwand Verformungen ein, die auch bei dieser Anordnung eine Verringerung des Abstandes zwischen der Schulter und den Spannelementen bewirken. Die Berücksichtigung dieser Einflüsse bei der Dimensionierung der Verbindung ermöglicht eine Reduzierung der Hülsenwandstärke und Verringerung der Herstellungskosten.

Bei der erfindungsgemäßen Ausgestaltung der Hülse entsprechend den Merkmalen des Anspruchs 3 bzw. 4 mit mehreren in Umfangsrichtung angeordneten Ausnehmungen weist jede der Ausnehmungen eine Anlagefläche auf, die sich in Umfangsrichtung senkrecht zur Mitten- bzw. Verspannachsen der Spannelemente symmetrisch zu beiden Seiten erstreckt. Zur Erreichung des Kraft- und Formschlusses müssen die Spannelemente an dieser Fläche vollflächig anliegen und eine hohe Oberflächengüte aufweisen. Entsprechend den verwendeten Materialien wird die Größe des Winkels zwischen den Keilflächen der Spannelemente bzw. den Anlageflächen der Hülse und den jeweiligen Verspann- oder Mittenachsen der Spannelemente festgelegt. Dieser ist so zu wählen, daß nach dem Verspannvorgang eine Haftreibung und somit eine Selbsthemmung der verspannten Bauteile bzw. der Verbindungsanordnung vorliegt. Die dann zur Erhaltung des Zustandes erforderlichen Kräfte sind gering.

Mit den Merkmalen des Anspruchs 2 können somit gleiche Flächen problemlos in jede Ausnehmung und unabhängig vom Durchmesser z.B. in der kostengünstigsten Form als ebene Fläche erzeugt werden. Dadurch ergeben sich große Vereinfachungen bei der Herstellung der Spannelemente. Diese können aus Flachmaterial oder aus hochwertigem Guß hergestellt werden. In Abhängigkeit der Belastungen können gegenüber einer Ausführung nach der EP 0 775 863 B1 für verschiedene Durchmesser- und Anwendungsbereiche die gleichen Spannelemente verwendet werden. Dies ermöglicht eine Standardisierung, Serienherstellung und Lagerhaltung dieser Bauteile. Neben großen Fertigungsvorteilen und Vereinfachungen bei der mechanischen Bearbeitung der Hülse ergeben sich enorme Kostenreduzierungen bei der Herstellung der Spannelemente. Zusätzliche hohe Transportkosten, wie sie bei einer Ausführung nach der EP 0 775 863 B1 für die erforderlichen großen Schmiederinge anstehen, fallen aufgrund der Einzelherstellung für die Spannelemente nicht mehr an.

Durch die erfindungsgemäße Ausgestaltung der Hülse ergeben sich weitere Vorteile. Ausgehend von der Größe der übertragbaren Belastungen und der Dimensionierung der Bauteile ergibt sich die Möglichkeit, die Anzahl der Ausnehmungen in Umfangsrichtung auf die Mindestanzahl der erforderlichen Spannelemente zu reduzieren. Es ist anzustreben, die Ausnehmungen in der Hülse in einem Abstand zueinander anzuordnen, so daß ein radialer Steg jeweils zwischen zwei der Ausnehmungen verbleibt. Während bei einer Ausführung entsprechend der EP 0 775 863 B1 ein Volumen zur Aufnahme der Spannelemente durch Zerspanungsarbeit über dem vollen Umfang aus der Hülse herausgearbeitet werden muß, verringert sich dieser nun entsprechend der Anzahl der erforderlichen Spannelemente. Zudem wird das Stülp- und Tragverhalten der Hülse durch den in dem hauptbelasteten Bereich verbleibenden vollen Querschnitt heraufgesetzt, so daß die Wandstärke unter Beibehaltung des erforderlichen Verspannungszustandes mittels einer Optimierung reduziert werden kann. Dieses führt zu weiteren Kostenreduzierungen.

Durch die erfindungsgemäße Gestaltung der Verbindungsanordnung ergibt sich die Möglichkeit, diese zur Nutzung der zu erzielenden Vorteile nach der EP 0 775 863 B1 auch an den Verbindungen einzusetzen, die aufgrund der Erforderlichkeit eines Verfahrens in kurzen Zeitabständen geöffnet und wieder verspannt werden müssen. in diesem Fall können als Verspannmittel relativ schnell wirkende Vorrichtungen oder Aggregate angeordnet werden. Diese können mechanisch wirkende Hebel- oder Exzenterverspannungen wie auch hydraulisch, pneumatisch, elektrisch oder entsprechend thermisch wirkende Aggregate sein, wobei sie jeweils einzeln oder in Kombination miteinander die erforderliche Verspannkraft erzeugen können. Diese werden von der Industrie als integriertekombinierte Komponenten, z.B. als Elektromotor und Öl-Hydraulikpumpe in einem Gehäuse oder als pneumatisch hydraulische Vorschubeinheiten angeboten. Diese Verspannmittel können unabhängig von der Betriebsbelastung gewählt werden. Die Lage oder die Wirkachse der Verspannmittel, die sowohl mit den Spannelementen als auch mit dem verspannten Bauteil entsprechend der Erforderlichkeit lösbar oder fest verbunden angeordnet werden, braucht nicht die Lage der Verspannachse der Spannelemente aufzuweisen. Durch handelsübliche Verbindungen können die Verspannmittel z.B. auf einer Ringkonstruktion auf der Außenseite eines Verschlußdeckels und / oder an der Hülse zusammen mit den Spannelementen angeordnet und gemeinsam zum Verspannen positioniert werden. Der Verspannvorgang läßt sich somit in relativ kurzer Zeit durchführen.

Durch die Gestaltung der Verschlußdeckel mit einer an der Außenseite angearbeiteten Schulter ergibt sich bei besonders extrem belasteten Verbindungen die Möglichkeit, bei einer Ausführung der Verspannmittel als Schrauben diese in Richtung der Verspannachse durch die Spannelemente hindurchzuführen und diese zusätzlich mit der Hülse entsprechend einer Ausführung nach der EP 0 775 863 B1 zu verspannen. Die radiale Steifigkeit des Deckels erhöht somit das Tragverhalten der umfassenden Hülse in dem Bereich, in dem die lastabtragenden Spannelemente die Betriebsbelastungen übertragen. Das Stülpen der Hülse wird reduziert, es ergeben sich Vorteile z.B. in Bezug auf das Dichtheitsverhalten einer Flanschverbindung.

Zur gleichmäßigeren Belastung der tragenden Bauteile können z.B. bei Verbindungen von Rohr- oder Zylinderenden untereinander oder bei Verbindungen von zylindrischen Bauteiten mit dem Fundament der Bund und die Hülse sowohl nach innen als auch nach außen vorspringend angeordnet werden. Die Spannelemente übertragen dadurch die Belastungen sowohl über dem nach innen als auch über dem nach außen vorspringenden Bund. An diesem Bauteil treten Stülpverformungen nicht auf, so daß sich für diese Art der Verbindungsanordnungen weitere Vorteile ergeben.

Ausführungsbeispiele der Erfindung werden anhand von schematischen Zeichnungen dargestellt und beschrieben.

Es zeigen:
- Fig.1: eine Schnittdarstellung einer Verbindungsanordnung von einem Rohr- oder Zylinderende mit einem gewölbten Verschlußdeckel.
- Fig.2: eine perspektivische Innenansicht eines Hülsenausschnittes.
- Fig.3: einen Längsschnitt einer Verbindungsanordnung von zwei Rohr- oder Zylinderenden.
- Fig.4: eine Verbindungsanordnung analog der Schnittdarstellung in Fig. 3, jedoch mit einer aus Einzelsegmenten ausgeführten Schulter.
- Fig.5: ein mit den Anschlußkonstruktionen verspanntes Großwälzlager, dargestellt in einem Längsschnitt.
- Fig. 6: eine Schnittdarstellung einer Verbindungsanordnung von einem Rohr- oder Zylinderende mit einem ebenen Verschlußdeckel.

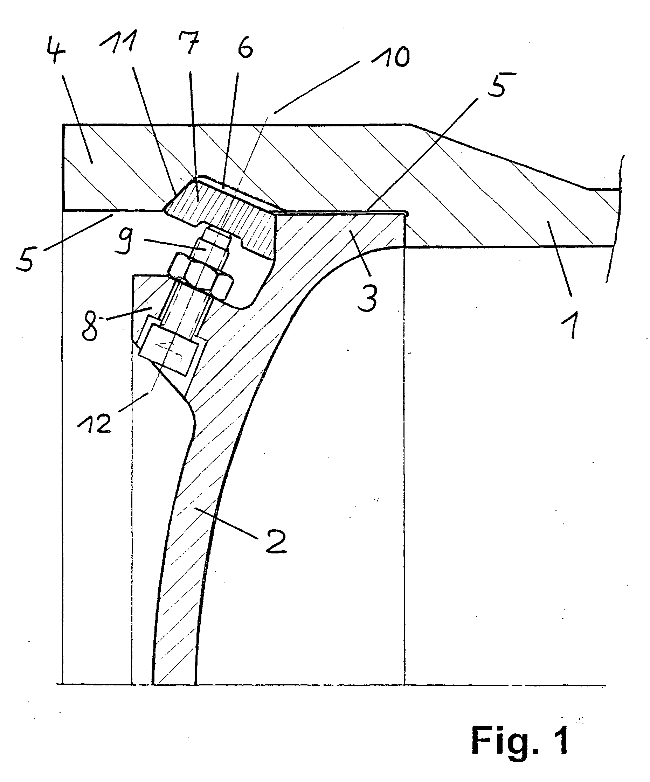

Fig. 1 zeigt in einer Schnittdarstellung eine lösbare Verbindungsanordnung von einem Zylinderende (1) mit einem gewölbten Verschlußdeckel (2), der an seiner Außenseite eine angearbeitete Schulter (8) aufweist. In der an dem offenen Ende des Zylinders (1) fest angeordneten Hülse (4) ist eine Ausdrehung (5) eingearbeitet. Diese umfaßt den gewölbten Boden (2) mit dem angearbeiteten Bund (3). In der Ausdrehung (5) sind in Umfangsrichtung mehrere Ausnehmungen (6) mit je einer Anlagefläche (11) eingearbeitet, an denen die Spannelemente (7) vollflächig anliegen. Mittels Schrauben als Verspannmittel (9) wird zwischen der Schulter (8) und den Spannelementen (7) während des Zusammenbaus ein Kraft- und Formschluß zwischen der Hülse, den Spannelementen und dem Bund erzeugt.

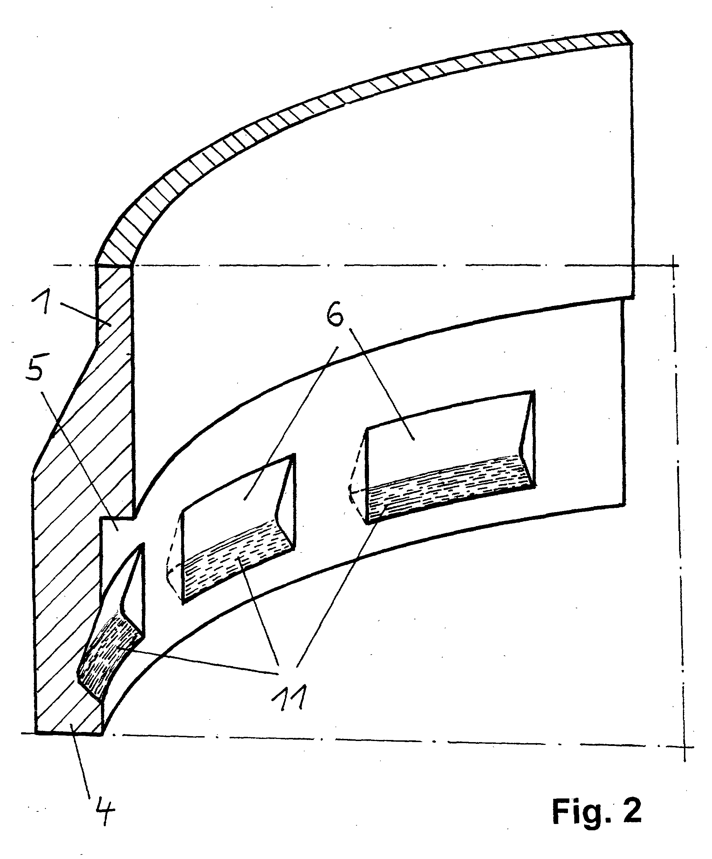

Fig. 2 zeigt in einer perspektivischen Innenansicht einen Ausschnitt von dem offenen Ende einer Hülse (4) mit mehreren in der Ausdrehung (5) eingearbeiteten Ausnehmungen (6), die zur Aufnahme der keilförmigen Spannelemente je eine Anlagefläche (11) aufweisen. Die eingearbeiteten Ausnehmungen (6) sind in Umfangsrichtung so angeordnet, daß zwischen jeder Ausnehmung ein Steg bzw. die volle Hülsenwandstärke verbleibt.

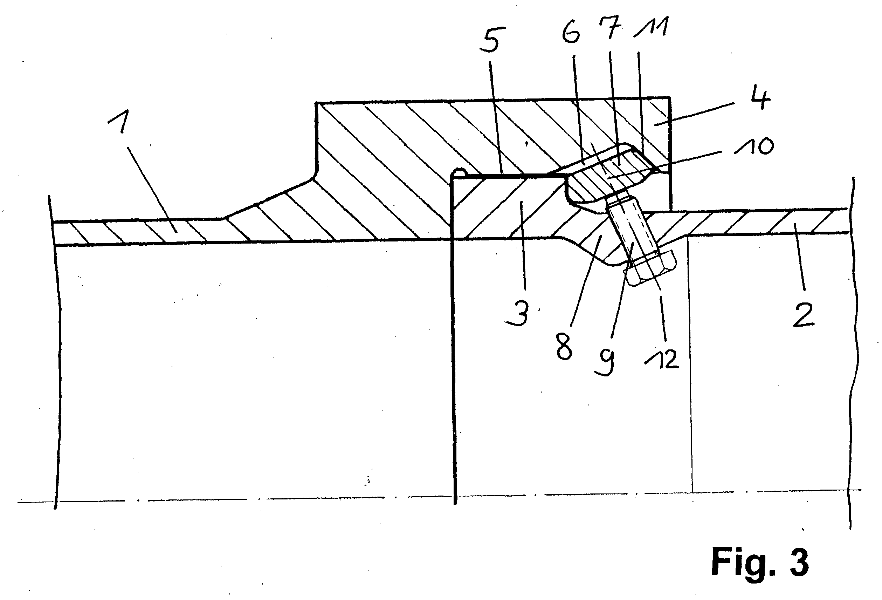

Fig. 3 zeigt den Längsschnitt einer unpaarigen Verbindung mit einer an dem Zylinderende (1) fest angeordneten Hülse (4), die an dem offenen Ende eine Ausdrehung (5) aufweist. Diese umfaßt das Bauteil (2) mit dem angearbeiteten Bund (3). Die Ausdrehung (5) weist in Umfangsrichtung mehrere Ausnehmungen (6) mit je einer Anlagefläche (11) zur Aufnahme und vollflächigen Anlage der keilförmigen Spannelemente (7) auf. Zwischen der in unmittelbarer Nähe zum Bund (3) in dem zylindrischen Bereich angeordneten Schulter (8) und den Spannelementen (7) bewirken Schrauben als Verspannmittel (9) während des Zusammenbaus einen Kraft- und Formschluß zwischen der Hülse (4), den Spannelementen (7) und dem Bund (3).

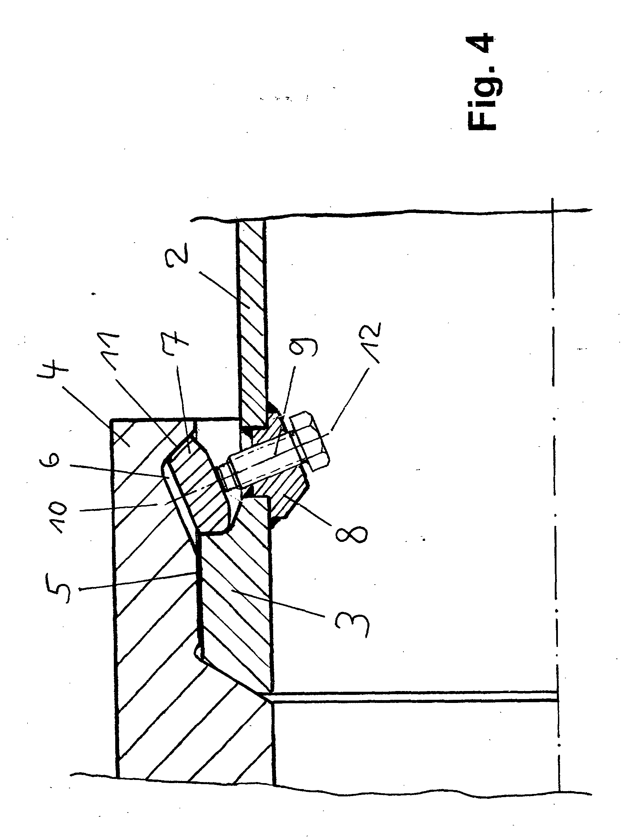

Fig. 4 zeigt als Ausführungsbeispiel den Längsschnitt der in Fig. 3 dargestellten Verbindung mit einer aus Einzelsegmenten bestehenden Schulter. Die Segmente sind in Bohrungen, die in einem rechten Winkel zur Zylinderwand angeordnet und somit relativ einfach herzustellen sind, eingesteckt und verschweißt. Die Stirnflächen der zu verspannenden Bauteile sind unter einem Winkel angeordnet. Dieses ist z.B. zur Aufnahme hoher Querkräfte oder zur zentrischen Anordnung bei rotierenden Bauteilen erforderlich.

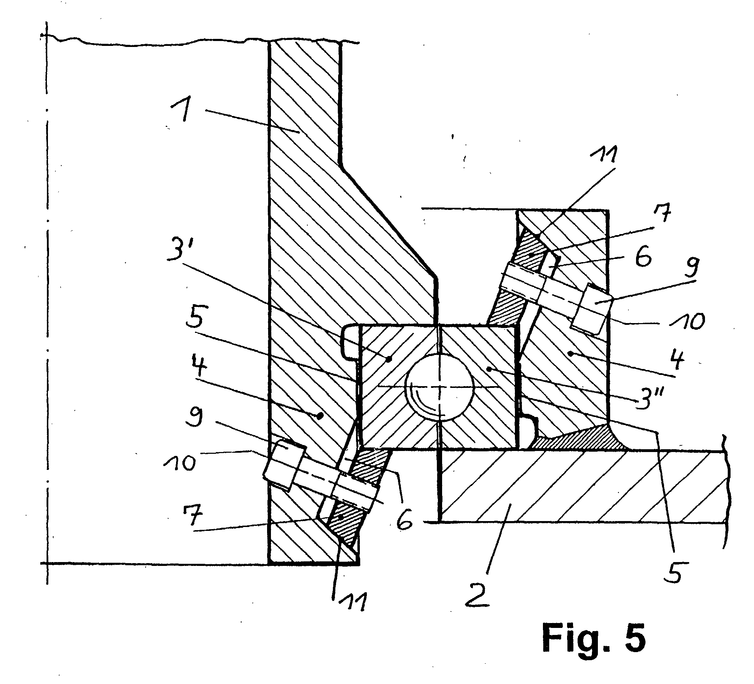

Fig. 5 zeigt in einem Längsschnitt ein einreihiges, einen Innenring (3') und Außenring (3") aufweisendes Großwälzlager (zu verspannendes Bauteil) mit seiner Verbindung zur feststehenden (Bauteil 1) und zur drehbaren Anschlußkonstruktion (Bauteil 2). An jedem der Bauteile (1,2) ist eine Hülse (4) fest angeordnet, die an dem offenen Ende eine Ausdrehung (5) aufweist. Die Ausdrehungen weisen in Umfangsrichtung mehrere Ausnehmungen (6) mit je einer Anlagefläche (11) zur Aufnahme und vollflächigen Anlage der keilförmigen Spannelemente (7) auf. Schrauben als Verspannmittel (9) erzeugen während des Zusammenbaus einen Kraft- und Formschluß jeweils zwischen der Hülse, den Spannelementen (7), dem Lager und der Anschlußkonstruktion.

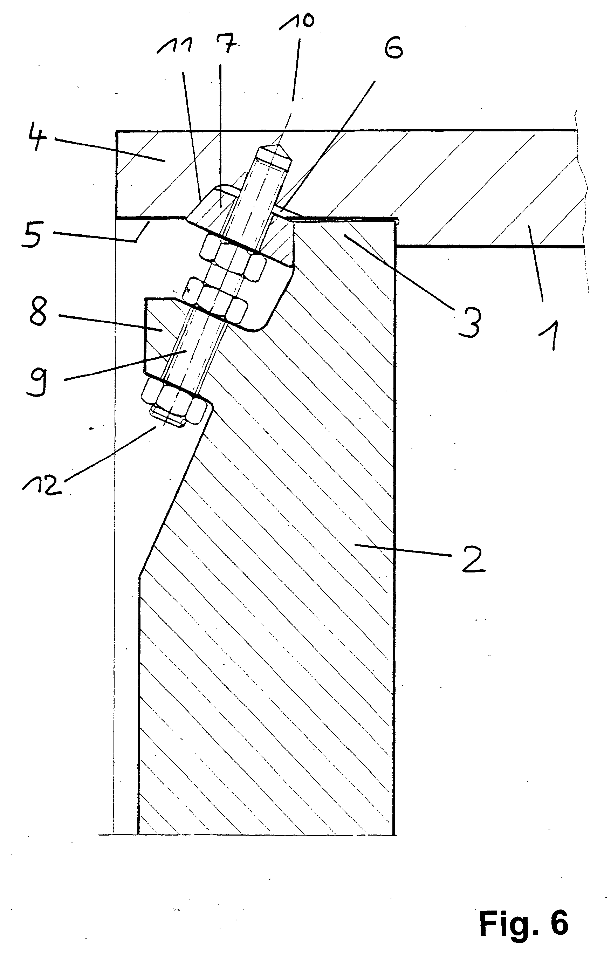

Fig. 6 zeigt als Ausführungsbeispiel eine Schnittdarstellung einer lösbaren Verbindung von einem Zylinderende (1) mit einem ebenen Verschlußdeckel (2), der an der Außenseite eine angearbeitete Schulter (8) aufweist. Die an dem offenen Ende des Zylinders (1) fest angeordnete Hülse (4) weist eine Ausdrehung (5) auf. Diese umfaßt den ebenen Verschlußdeckel (2) mit dem angearbeiteten Bund (3). In der Ausdrehung (5) sind in Umfangsrichtung Ausnehmungen (6) mit je einer Anlagefläche (11) eingearbeitet, an denen die Spannelemente (7) vollflächig anliegen. Schrauben als Verspannmittel (9) erzeugen in Richtung der Verspannachse (10) mit der Schulter (8) des Verschlußdeckels (2), den Spannelementen (7) und der Hülse (4) einen Kraft- und Formschluß zwischen den verspannten Bauteilen. Das Zusammenwirken aller Bauteile ermöglicht die Nutzung der radialen Steifigkeit des ebenen Verschlußdekkels, so daß die Verformungssteifigkeit der gesamten Verbindung erhöht wird.

### Bezugsziffernliste:

- 1: Rohr- / Zylinderenden oder zylindrische Anschlußkonstruktion
- 2: zylindrische Anschlußkonstruktion oder dem Verwendungszweck entsprechend konstruktiv ausgebildeter Verschlußdeckel
- 3: radial nach außen oder nach innen ausgebildeter Bund
- 4: radial nach außen oder nach innen ausgebildete Hülse
- 5: Ausdrehung in der Hülse zur axial übergreifenden Aufnahme eines Bundes
- 6: in Umfangsrichung angeordnete Ausnehmungen in der Hülse zur Aufnahme der Spannelemente
- 7: Spannelement
- 8: angearbeitete oder aus mehreren Einzelsegmenten bestehende Schulter
- 9: Mittel zum Erzeugen des Verspannungszustandes
- 10: Verspannachse der Spannelemente
- 11: Anlageflächen in den Ausnehmungen der Hülse zur vollflächigen Anlage der Spannelemente
- 12: Anordnungs- und Wirkachse der Verspannmittel

## Patentansprüche

1. Lösbare kraft- und formschlüssige Verbindungsanordnung mit zwei an ihrer Verbindungsstelle rotationssymmetrischen, paarigen Bauteilen (1, 2), mit einem radial nach außen oder innen vorspringenden Bund (3) oder Ring an dem einen Bauteil (1), mit einem radial nach außen oder innen vorspringenden Bund (3) oder Ring an dem anderen Bauteil (2), mit einer Hülse (4), die beide Bunde (3) oder Ringe axial übergreift und mit einer Anzahl von keilförmigen Spannelementen (7), die über den Umfang verteilt jeweils zwischen einem der Bunde (3) oder Ringe und der Hülse (4) angeordnet sind und die entlang einer Verspannachse (10) verspannbar sind,
**dadurch gekennzeichnet,**
**daß** das eine Bauteil (1) und/oder das andere Bauteil (2) eine Schulter (8) aufweist, die aus ein- oder mehrteiligen, lösbar oder fest angeordneten Einzelsegmenten besteht, daß zwischen der Schulter (8) und den Spannelementen (7) über den Umfang der Schulter verteilt Spannmittel (9) angeordnet sind, die in Richtung ihrer Anordnungs-und Wirkachse (12) mit der Schulter (8) und den Spannelementen (7) derart zusammenwirken, daß sie diese in Richtung der Verspannachse (10) radial und axial zwischen dem Bund (3) oder Ring des jeweiligen Bauteils und der Hülse (4) verspannen.

2. Lösbare kraft- und formschlüssige Verbindungsanordnung mit zwei an der Verbindungsstelle rotationssymmetrischen, unpaarigen Bauteilen (1, 2), mit einem radial nach außen oder innen vorspringenden Bund (3) oder Ring an dem einen Bauteil (2), mit einer an dem anderen Bauteil (1) ausgebildeten Hülse (4), die den Bund (3) oder Ring in einer an dem offenen Ende der Hülse (4) vorhandenen Ausdrehung (5) axial übergreift und mit einer Anzahl von keilförmigen Spannelementen (7), die über den Umfang verteilt zwischen dem Bund (3) oder Ring und der Hülse (4) angeordnet sind und die entlang einer Verspannachse (10) verspannbar sind,
**dadurch gekennzeichnet,**
**daß** das eine Bauteil (2) und/oder das andere Bauteil (1) eine Schulter (8) aufweist, die aus ein- oder mehrteiligen, lösbar oder fest angeordneten Einzelsegmenten besteht, daß zwischen der Schulter (8) und den Spannelementen (7) über den Umfang verteilt Spannmittel (9) angeordnet sind, die in Richtung ihrer Anordnungs- und Wirkachse (12) mit der Schulter (8) und den Spannelementen (7) derart zusammenwirken, daß sie diese in Richtung der Verspannachse (10) radial und axial zwischen dem Bund (3) oder Ring des jeweiligen Bauteils und der Hülse (4) verspannen.

3. Lösbare kraft- und formschlüssige Verbindungsanordnung mit zwei an der Verbindungsstelle rotationssymmetrischen, paarigen Bauteilen (1, 2), mit einem radial nach außen oder innen vorspringenden Bund (3) oder Ring an dem einen Bauteil (1), mit einem radial nach außen oder innen vorspringenden Bund (3) oder Ring an dem anderen Bauteil (2), mit einer Hülse (4), die beide Bunde (3) oder Ringe axial übergreift und mit einer Anzahl von keilförmigen Spannelementen (7), die über den Umfang verteilt jeweils zwischen einem der Bunde (3) oder Ringe und der Hülse (4) angeordnet sind und die entlang einer Verspannachse (10) verspannbar sind,
**dadurch gekennzeichnet,**
**daß** an jedem offenen Ende in der Hülse (4) über ihren Umfang verteilt mehrere Ausnehmungen (6) in Umfangsrichtung in einem Abstand zueinander oder direkt nebeneinander angeordnet sind, daß jede dieser Ausnehmung (6) zur Aufnahme und Anlage eines der keilförmigen Spannelemente (7) eine Anlagefläche (11) aufweist und daß der Winkel zwischen den Anlageflächen (11) bzw. den Keilflächen der anliegenden Spannelemente (7) und der jeweiligen Verspannachse (10) nicht größer als der Haftreibungswinkel der verwendeten, reibschlüssig zusammen wirkenden Materialien ist.

4. Lösbare kraft- und formschlüssige Verbindungsanordnung mit zwei an der Verbindungsstelle rotationssymmetrischen, unpaarigen Bauteilen, mit einem radial nach außen oder innen vorspringenden Bund (3) oder Ring an dem einen Bauteil (2), mit einer an dem anderen Bauteil (1) ausgebildeten Hülse (4), die den Bund (3) oder Ring in einer an dem offenen Ende der Hülse (4) vorhandenen Ausdrehung (5) axial übergreift und mit einer Anzahl von keilförmigen Spannelementen (7), die über den Umfang verteilt zwischen dem Bund (3) oder Ring und der Hülse (4) angeordnet sind und die entlang einer Verspannachse (10) verspannbar sind,
**dadurch gekennzeichnet,**
**daß** an jedem offenen Ende in der Hülse (4) über den Umfang verteilt mehrere Ausnehmungen (6) in Umfangsrichtung in einem Abstand zueinander oder direkt nebeneinander angeordnet sind, daß jede dieser Ausnehmung (6) zur Aufnahme und Anlage eines keilförmigen Spannelementes (7) eine Anlagefläche (11) aufweist und daß der Winkel zwischen den Anlageflächen (11) bzw. den Keilflächen der anliegenden Spannelemente (7) und der jeweiligen Verspannachse (10) nicht größer als der Haftreibungswinkel der verwendeten, reibschlüssig zusammen wirkenden Materialien ist.

5. Lösbare kraft- und formschlüssige Verbindungsanordnung nach Anspruch 1 oder 2,
**dadurch gekennzeichnet,**
**daß** an jedem offenen Ende in der Hülse (4) über ihren Umfang verteilt mehrere Ausnehmungen (6) in Umfangsrichtung in einem Abstand zueinander oder direkt nebeneinander angeordnet sind, daß jede dieser Ausnehmung (6) zur Aufnahme und Anlage eines der keilförmigen Spannelemente (7) eine Anlagefläche (11) aufweist und daß der Winkel zwischen den Anlageflächen (11) bzw. den Keilflächen der anliegenden Spannelemente (7) und der jeweiligen Verspannachse (10) nicht größer als der Haftreibungswinkel der verwendeten, reibschlüssig zusammen wirkenden Materialien ist.

6. Verbindungsanordnung nach einem der Ansprüche 1 - 5, **dadurch gekennzeichnet, daß** die Mittel (9) Schrauben sind.

7. Verbindungsanordnung nach Anspruch 6, **dadurch gekennzeichnet, daß** die Schrauben (Mittel 9) durch Bohrungen in den Spannelementen (7) in Richtung der Verspannachse (10) hindurchgehen und mit der Hülse (4) zusammenwirken.

8. Verbindungsanordnung nach einem der Ansprüche 1 - 5, **dadurch gekennzeichnet, daß** die Mittel (9) hydraulisch, pneumatisch, elektrisch oder thermisch wirkende Aggregate oder weitere mechanisch wirkende Bauteile sind, die jeweils einzeln oder in Kombinationen zueinander angeordnet werden können.

9. Verbindungsanordnung nach Anspruch 8, **dadurch gekennzeichnet, daß** die Mittel (9) lösbar oder fest miteinander, mit dem Bauteil (2) und/oder mit der Hülse (4) und/oder mit den Spannelementen (7) verbunden sind.

10. Verbindungsanordnung nach einem der Ansprüche 1 - 9, **dadurch gekennzeichnet, daß** die an dem Bauteil (1) ausgebildete Hülse (4) lösbar mit dem Bauteil (1) verbunden ist.

11. Verbindungsanordnung nach einem der Ansprüche 1 - 9, **dadurch gekennzeichnet, daß** die an dem Bauteil (1) ausgebildete Hülse (4) und der an dem Bauteil (2) angeordnete Bund (3) sowohl radial nach innen als auch radial nach außen ausgebildet sind.

12. Verbindungsanordnung nach Anspruch 3 oder 4, **dadurch gekennzeichnet, daß** das zu verspannende Bauteil jeweils der Innenring (3') oder der Außenring (3") eines Großwälzlagers ist, wobei die Ausnehmungen (6) in der an dem Bauteil (1) ausgebildeten Hülse (4) radial nach außen und die Ausnehmungen (6) in der an dem Bauteil (2) ausgebildeten Hülse (4) radial nach innen angeordnet sind.

13. Verbindungsanordnung nach einem oder mehreren der Ansprüche 1 - 12, **dadurch gekennzeichnet, daß** die Schulter (8) lösbar oder fest zusätzlich an der Hülse (4) oder nur an der Hülse (4) angeordnet ist.

## Claims

1. A detachable, nonpositive and positive-locking connecting assembly with two paired components (1, 2) rotationally symmetrical at the connection point, having a radially outwardly or inwardly projecting collar (3) or ring on the one component (1), having a radially outwardly or inwardly projecting collar (3) or ring on the other component (2), having a sleeve (4), which axially extends over the two collars (3) or rings, and having a number of wedge-shaped tensioning elements (7) which are arranged respectively distributed over the circumference between one of the collars (3) or rings and the sleeve (4) and which can be tensioned along a tensioning axis (10),
**characterized in that**
the one component (1) and/or the other component (2) has a shoulder (8) which consists of one-part or multi-part, detachably or rigidly arranged individual segments, and **in that** tensioning means (9) are arranged distributed over the circumference between the shoulder (8) and the tensioning elements (7) and which cooperate with the shoulder (8) and the said tensioning elements (7) in the direction of their axis of arrangement and action (12) such that they tension same radially and axially in the direction of the tensioning axis (10) between the collar (3) or ring of the respective component and the sleeve (4).

2. A detachable, nonpositive and positive-locking connecting assembly with two unpaired components (1, 2) rotationally symmetrical at the connection point, having a radially outwardly or inwardly projecting collar (3) or ring on the one component (2), having a sleeve (4) which is formed on the other component (1) and which axially extends over the collar (3) or ring in a turn-out (5) present at the open end of the sleeve (4) and having a number of wedge-shaped tensioning elements (7) which are arranged distributed over the circumference between the collar (3) or ring and the sleeve (4) and which can be tensioned along a tensioning axis (10),
**characterized in that**
the one component (2) and/or the other component (1) has a shoulder (8) which consists of one-part or multi-part, detachably or rigidly arranged individual segments, and **in that** tensioning means (9) are arranged distributed over the circumference between the shoulder (8) and the tensioning elements (7) and which cooperate with the shoulder (8) and the said tensioning elements (7) in the direction of their axis of arrangement and action (12) such that they tension same radially and axially in the direction of the tensioning axis (10) between the collar (3) or ring of the respective component and the sleeve (4).

3. A detachable, nonpositive and positive-locking connecting assembly with two paired components (1, 2) rotationally symmetrical at the connection point, having a radially outwardly or inwardly projecting collar (3) or ring on the one component (1), having a radially outwardly or inwardly projecting collar (3) or ring on the other component (2), having a sleeve (4), which axially extends over the two collars (3) or rings, and having a number of wedge-shaped tensioning elements (7) which are arranged respectively distributed over the circumference between one of the collars (3) or rings and the sleeve (4) and which can be tensioned along a tensioning axis (10),
**characterized in that**
on each open end in the sleeve (4) a plurality of recesses (6) is arranged in circumferential direction distributed over its circumference spaced towards or directly next to each other, **in that** each of these recesses (6) features a contact surface (11) for taking and contacting one of the wedge-shaped tensioning elements (7), and **in that** the angle between the contact surfaces (11) and/or between the wedge surfaces of the contacting tensioning elements (7) and the respective tensioning axis (10) does not exceed the angle of static friction of the used frictionally engaged and cooperating materials.

4. A detachable, nonpositive and positive-locking connecting assembly with two unpaired components (1, 2) rotationally symmetrical at the connection point, having a radially outwardly or inwardly projecting collar (3) or ring on the one component (2), with a sleeve (4) which is formed at the other component (1) and which axially extends over the collar (3) or ring in a turn-out (5) present at the open end of the sleeve (4) and having a number of wedge-shaped tensioning elements (7) which are arranged distributed over the circumference between the collar (3) or ring and the sleeve (4) and which can be tensioned along a tensioning axis (10),
**characterized in that**
on each open end in the sleeve (4) a plurality of recesses (6) is arranged in circumferential direction distributed over its circumference spaced towards or directly next to each other, **in that** each of these recesses (6) features a contact surface (11) for taking and contacting one of the wedge-shaped tensioning elements (7), arid **in that** the angle between the contact surfaces (11) and/or between the wedge surfaces of the contacting tensioning elements (7) and the respective tensioning axis (10) does not exceed the angle of static friction of the used frictionally engaged and cooperating materials.

5. A detachable, nonpositive and positive-locking connecting assembly according to Claim 1 or 2,
**characterized in that**
on each open end in the sleeve (4) a plurality of recesses (6) is arranged in circumferential direction distributed over its circumference spaced towards or directly next to each other, **in that** each of these recesses (6) features a contact surface (11) for taking and contacting one of the wedge-shaped tensioning elements (7), and **in that** the angle between the contact surfaces (11) and/or between the wedge surfaces of the contacting tensioning elements (7) and the respective tensioning axis (10) does not exceed the angle of static friction of the used frictionally engaged and cooperating materials.

6. A connecting assembly according to any one of Claims 1 to 5, **characterized in that** the means (9) are bolts.

7. A connecting assembly according to Claim 6, **characterized in that** the bolts (means 9) pass through bores in the tensioning elements (7) in direction of the tensioning axis (10) and cooperate with the sleeve (4).

8. A connecting assembly according to any one of Claims 1 to 5, **characterized in that** the means (9) are hydraulically, pneumatically, electrically or thermally acting assembly units or further mechanically acting components which can be arranged either individually or in combination with one another.

9. A connecting assembly according to Claim 8, **characterized in that** the means (9) are connected detachably or rigidly with one another, with component (2) and/or with sleeve (4) and/or with the tensioning elements (7).

10. A connecting assembly according to any one of Claims 1 to 9, **characterized in that** the sleeve (4) which is formed on the component (1) is detachably connected to the component (1).

11. A connecting assembly according to any one of Claims 1 to 9, **characterized in that** the sleeve (4) which is formed on the component (1) and the collar (3) which is arranged on the component (2) are designed both radially inwardly and radially outwardly.

12. A connecting assembly according to Claim 3 or 4, **characterized in that** the component to be tensioned is respectively the inner ring (3') or the outer ring (3") of a large rolling bearing with the recesses (6) in the sleeve (4) formed on the component (1) being arranged radially outwardly and the recesses (6) in the sleeve (4) formed on the component (2) being directed radially inwardly.

13. A connecting assembly according to any one or several of Claims 1 to 12, **characterized in that** the shoulder (8) is arranged detachably or rigidly additionally on the sleeve (4) or on the sleeve (4) only.

## Revendications

1. Dispositif de liaison non permanente, par complémentarité de forme et de force, avec deux éléments de construction jumelés (1, 2) à symétrie de révolution à leur point de liaison, comprenant :
- un épaulement (3) faisant saillie radialement vers l'extérieur ou vers l'intérieur ou un anneau sur un élément de construction (1),
- un épaulement (3) faisant saillie radialement vers l'extérieur ou l'intérieur ou un anneau sur l'autre élément de construction (2),
- un manchon (4) chevauchant axialement les deux épaulements (3) ou les anneaux,
- et un nombre d'éléments de serrage (7) cunéiformes, qui sont répartis sur le pourtour, entre l'un des épaulements (3), ou les anneaux, et le manchon (4) et qui sont serrés le long d'un axe de serrage (10),
**caractérisé par le fait que**
- l'un des éléments de construction (1) et/ou l'autre élément de construction (2) présente un épaulement (8) qui est composé de segments individuels monoblocs ou multiples, amovibles ou bien fixés de façon permanente,
- des moyens de serrage (9) sont répartis sur le pourtour de l'épaulement (8), entre l'épaulement (8) et les éléments de serrage (7), qui dans la direction de l'axe d'agencement servent, avec l'épaulement (8) et les éléments de serrage (7), à serrer ces derniers dans la direction de l'axe de serrage (10) radialement et axialement entre l'épaulement (3) ou l'anneau de l'élément de construction correspondant et le manchon (4).

2. Dispositif de liaison non permanente, par complémentarité de forme et de force, avec deux éléments de construction non jumelés (1, 2), à symétrie de révolution au point de liaison, comprenant :
- un épaulement (3) faisant saillie radialement vers l'extérieur ou vers l'intérieur ou un anneau sur un élément de construction (2),
- un manchon (4) formé sur l'autre élément de construction (1), qui chevauche axialement l'épaulement (3) ou l'anneau dans une rainure (5) située à l'extrémité libre du manchon (4) et
- un nombre d'éléments de serrage cunéiformes (7) qui sont répartis sur le pourtour entre l'épaulement (3) ou l'anneau et le manchon (4) et qui peuvent être serrés dans la direction d'un axe de serrage (10),
**caractérisé par le fait que**
- l'un des éléments de construction (1) et/ou l'autre élément de construction (2) présente un épaulement (8) qui est composé de segments individuels monoblocs ou multiples, amovibles ou bien fixés de façon permanente,
- des moyens de serrage (9) sont répartis sur le pourtour de l'épaulement (8), entre l'épaulement (8) et les éléments de serrage (7), qui dans la direction de l'axe d'agencement servent, avec l'épaulement (8) et les éléments de serrage (7), à serrer ces derniers dans la direction de l'axe de serrage (10) radialement et axialement entre l'épaulement (3) ou l'anneau de l'élément de construction correspondant et le manchon (4).

3. Dispositif de liaison non permanente, par complémentarité de forme et à force, avec deux éléments de construction jumelés (1, 2), à symétrie de révolution au point de liaison, comprenant :
- un épaulement (3) faisant saillie radialement vers l'extérieur ou l'intérieur ou un anneau sur un élément de construction (1),
- un épaulement (3) faisant saillie radialement vers l'extérieur ou l'intérieur ou un anneau sur l'autre élément de construction (2)
- un manchon (4) chevauchant axialement les deux épaulements (3) ou anneaux
- et un nombre d'éléments de serrage (7) cunéiformes qui sont répartis sur le pourtour, entre les épaulements (3) ou anneaux et le manchon (4) et qui peuvent être serrés le long d'un axe de serrage (10),
**caractérisé**
- **par le fait qu**'à chaque extrémité libre plusieurs échancrures (6) sont réparties sur le pourtour du manchon (4) sur la circonférence, avec des intervalles les séparant ou directement l'une à côté de l'autre,
- par le fait que chacune de ces échancrures (6) présente une surface d'appui (11) pour recevoir et loger l'un des éléments de serrage cunéiformes (7),
- **et par le fait que** l'angle entre les surfaces d'appui (11) voire entre les surfaces cunéiformes des éléments de serrage (7) adjacents et l'axe de serrage correspondant (10) ne soit pas supérieur à l'angle de frottement par adhérence des matières utilisées, frictionnées et agissant ensemble.

4. Dispositif de liaison non permanente, par complémentarité de forme et de force, avec deux éléments de construction non jumelés (1, 2), à symétrie de révolution au point de liaison, comprenant :
- un épaulement (3) faisant saillie radialement vers l'extérieur ou vers l'intérieur ou un anneau sur un élément de construction (2),
- un manchon (4) formé sur l'autre élément de construction (1), qui chevauche axialement l'épaulement (3) ou l'anneau dans une rainure (5) située à l'extrémité libre du manchon (4) et
- un nombre d'éléments de serrage cunéiformes (7) qui sont répartis sur le pourtour entre l'épaulement (3) ou l'anneau et le manchon (4) et qui peuvent être serrés dans la direction d'un axe de serrage (10),
**caractérisé**
- **par le fait qu**'à chaque extrémité libre plusieurs échancrures (6) sont réparties sur le pourtour du manchon (4) sur la circonférence, avec des intervalles les séparant ou directement l'une à côté de l'autre,
- par le fait que chacune de ces échancrures (6) présente une surface d'appui (11) pour recevoir et loger l'un des éléments de serrage cunéiformes (7),
- **et par le fait que** l'angle entre les surfaces d'appui (11) voire entre les surfaces cunéiformes des éléments de serrage (7) adjacents et l'axe de serrage correspondant (10) ne soit pas supérieur à l'angle de frottement par adhérence des matières utilisées, frictionnées et agissant ensemble.

5. Dispositif de liaison non permanente, par complémentarité de forme et de force, en accord avec les revendications 1 ou 2,
**caractérisé**
- **par le fait qu**'à chaque extrémité libre plusieurs échancrures (6) sont réparties sur le pourtour du manchon (4) sur la circonférence, avec des intervalles les séparant ou directement l'une à côté de l'autre,
- **par le fait que** chacune de ces échancrures (6) présente une surface d'appui (11) pour recevoir et loger l'un des éléments de serrage cunéiformes (7),
- **et par le fait que** l'angle entre les surfaces d'appui (11) voire entre les surfaces cunéiformes des éléments de serrage (7) adjacents et l'axe de serrage correspondant (10) ne soit pas supérieur à l'angle de frottement par adhérence des matières utilisées, frictionnées et agissant ensemble.

6. Dispositif de liaison selon l'une des revendications 1 à 5, **caractérisé par le fait que** les moyens (9) sont des vis.

7. Dispositif de liaison selon la revendication 6, **caractérisé par le fait que** les vis (moyen 9) sont disposées dans les trous percés dans les éléments de serrage (7) dans le sens de l'axe de serrage (10) et coopèrent avec le manchon (4).

8. Dispositif de liaison selon l'une des revendications 1 à 5, **caractérisé par le fait que** les moyens (9) sont des groupes fonctionnels agissant de façon hydraulique, pneumatique, électrique ou bien thermique ou bien ils sont d'autres éléments de construction ayant une autre fonction mécanique pouvant être disposés individuellement ou en combinaison.

9. Dispositif de liaison selon la revendication 8, **caractérisé par le fait que** les moyens (9) amovibles ou bien fixés de façon permanente sont connectés avec l'élément de construction (2) et/ou le manchon (4) et/ou les éléments de serrage (7).

10. Dispositif de liaison selon l'une des revendications 1 à 9, **caractérisé par le fait que** le manchon. (4) formé sur l'élément de construction (1) est connecté de façon amovible avec l'élément de construction (1).

11. Dispositif de liaison selon les revendications 1 à 9, **caractérisé par le fait que** le manchon (4) formé sur l'élément de construction (1) et l'épaulement (3) disposé sur l'élément de construction (2) peuvent aussi bien être formés radialement vers l'intérieur que vers l'extérieur.

12. Dispositif de liaison selon la revendication 3 ou 4, **caractérisé par le fait que** l'élément de construction à serrer est selon le cas soit une bague intérieure (3') ou une bague extérieure (3") d'un grand palier de roulement, à l'occasion de quoi les échancrures (6) sont placées radialement vers l'extérieur sur le manchon (4) formé sur l'élément de construction (1) et les échancrures (6) sont placées radialement vers l'intérieur sur le manchon (4) formé sur l'élément de construction (2).

13. Dispositif de liaison selon une ou plusieurs des revendications 1 à 12, **caractérisé par le fait que** l'épaulement (8) est placé de façon amovible ou permanente en complément sur le manchon (4) ou seulement sur le manchon (4).
